# EUROPEAN PATENT APPLICATION

(11) **EP 1 986 014 A1**
(43) Date of publication of application: **29.10.2008**
(21) Application number: 08012696.4
(22) Date of filing: 04.08.2004
(51) Int. Cl.: G01N 35/00

(54) **Apparatus for processing a fluid sample**

(30) Priority: 21.08.2003 GB 0319671
(62) Divisional of application: 08001047.3
(71) Applicant: The Secretary of State for Defence DSTL, Salisbury, Wiltshire SP4 0JQ (GB)
(72) Inventor: Squirrell, David James, Salisbury, Wilthire SP4 0JG (GB); Bown, Kevin John, Salisbury, Wilthire SP4 0JG (GB); Walsh, Philip, Bristol BS1 5BU (GB)
(74) Representative: Leland, Emma Clare

(57) **Abstract**

An apparatus for processing a fluid sample prior to a nucleic acid amplification an reaction, comprising a platform, a chamber suitable for receiving a sample which is either integrated into the platform or removable from it, a functional capable of moving analyte or reagent or piercing seals of chambers that may reversibly attach to an arm of said apparatus and that may be held on the platform, a sealed chamber comprising a predispensed reagent for use in processing a fluid sample prior to a nucleic acid amplification reaction arranged on the platform, an arm capable of being raised and lowered and including a means for removeably attachin to the functional component such that said component may be raised and lowered the arm, and a means for moving the platform such that a chamber or functional component may be with respect to the arm.

## Description

This invention relates to an apparatus and associated method for processing a fluid sample.

The analysis of fluid samples, for example clinical or environmental samples, may be conducted for several reasons. One current area of interest is the development of a method for positively identifying biological material in a fluid sample, for example a clinical or environmental sample. Such a method would allow for early diagnosis of disease states, which in turn would enable rapid treatment and infection control, or the identification of environmental contaminants and the like. Although nucleic acid amplification, for example by polymerase chain reaction (PCR), is a useful and widely used method for positive identification of biological material in such samples, several problems exist when trying to successfully develop it for rapid identification of material in individual samples in a non-laboratory environment for say point of care disease diagnosis. One of the key problems lies in the fact that, prior to subjecting a typical clinical or environmental sample to nucleic acid amplification, the sample itself often needs to be purified and or concentrated. This is performed by a sequence of processing steps using reagents, some of which are hazardous. However, nucleic acid amplification is just one of many different possible examples of a technique where manipulation of a sample, especially a fluid sample, is required which involves a number of simultaneous or sequential processing steps. The processing steps themselves may be many and varied and may include for example chemical, optical, electrical, thermal, mechanical, acoustical, processing, sensing or monitoring, in addition to possible dilution and concentration steps.

To date such complex fluid processing is usually conducted in laboratories where samples are either treated manually one by one, or are treated with the use of specialist robotics facilities where many different samples can be processed in parallel. However, there are several problems associated with these methods. These include that they are slow, resource intensive, expensive, subject to error and to cross sample contamination. An alternative approach is to use conventional fluid processing systems that require fluid samples to flow sequentially through a series of different chambers where each chamber is utilised for a single step in a sequence. However such systems result in loss of sample which is critical when processing small volumes, and automation of such processes requires the use of complex fluidic assemblies and processing algorithms.

As such there remains a need to develop an improved apparatus whereby a fluid sample, particularly low volume fluid samples, can be processed using a series of pre-determined sequential steps, to obtain a desired end product. Such an apparatus should be readily adapted for use in a non-laboratory environment and by an operator with little or no laboratory training such that it can be used to manipulate a fluid sample, for example a clinical or environmental sample, prior to analysis, for example by nucleic acid amplification. Such an apparatus would ensure that analytical results could be rapidly obtained, would free the skilled worker from repetitive tasks and would reduce costs. Furthermore such an apparatus should have sufficient consistency and accuracy to prevent the failure of later tests, and should ideally comprise disposable components to minimise the likelihood of cross contamination and to eliminate the need for sterilisation.

A prior art search has identified US 6,374,684 which discloses a fluid control and processing system comprising a plurality of chambers and a moveable valve body that can be used to facilitate the processing of a fluid sample according to a given protocol. Although this provides a development in the field of an apparatus for processing a fluid sample, several problems remain. One such problem is that, in order to expose the fluid sample sequentially to different solutions, it is necessary to rotate the valve body to connect in turn, via several external ports, a sample processing chamber with a reservoir of each processing solution. Such an apparatus is not well suited for use in a non-laboratory environment by a non-skilled laboratory worker because, for among other reasons, there is a need to connect the external ports to solution reservoirs which is impractical and in the case of hazardous chemicals may pose a safety risk. Furthermore, the apparatus utilises a single fluid displacement chamber to deliver each processing solution to the sample in turn, and to remove any waste materials, which may result in mixing of residual material in the fluid displacement chamber and potential failure of sensitive processing sequences. There remains a need to develop an apparatus for processing a fluid sample that overcomes the above problems.

It is known to use magnetic particles to manipulate target materials in a sample solution. One example of this is disclosed in WO 94/18565 that discloses a method and associated apparatus for a specific binding assay. The apparatus comprises two or more vessels in which an immunodetermination is conducted. The analyte binds to a solid phase, for example magnetic particles, and is then moved, using a remover, from one vessel to another in sequence. A separating reaction, and any other required reactions, are performed in turn in each of the vessels and finally the particles bound to the target analyte are moved to a measuring vessel. Again although this provides some advance in the field of sample manipulation the apparatus is only suitable for simple sample manipulation and as such is not suitable for the highly complex multi step processing for example that required to purify and concentrate a sample prior to nuclei acid amplification. There remains a need to develop such an apparatus.

An apparatus, and associated method, have now been developed that overcome the above problems. The apparatus comprises:
(i) a platform comprising:
   (a) a chamber suitable for receiving a sample; and
   (b) a functional component;
(ii) an arm capable of being raised and lowered and including a means for removeably attaching to the functional component such that said component may be raised and lowered with the arm; and
(iii) a means for moving the platform such that any chamber or functional component may be aligned with respect to the arm.

The sample is introduced into the first chamber. The platform is then positioned such that the arm is directly above the functional component. The arm is lowered, attached to the functional component, and then raised. The platform is then moved such that now the chamber is directly underneath the arm, and the arm lowered thereby lowering the functional component into the chamber. Whilst in situ the functional component can interact with the chamber or the sample contained therein. When the interaction is complete the arm can either be raised thereby removing the functional component from the chamber, the platform moves, and the functional component is either replaced on the platform or is further lowered to interact with a further component on the platform. Alternatively the arm can detach from the functional component and the platform moves thereby leaving the functional component attached to the chamber.

The apparatus can be adapted such that the functional component can interact with the sample to conduct a wide range of physical processing. Examples of physical processing include thermal, acoustic, optical, sonication, electrical processing, sensing or monitoring techniques. For example the functional component could be a heater or sonicator that is manoeuvred as described and placed into the chamber to subject the sample to physical processing. Alternatively the functional component could be used to remove an analyte from the sample in the chamber. Such movement of the analyte could optionally comprise a solid phase binding material which is capable of binding a chosen analyte in the sample to form a complex that can then be moved from one chamber on the platform with the aid of the functional component and the movement of the arm and the platform and deposited in another chamber. Furthermore the functional component could interact with the chamber itself, for example could comprise a cutter for piercing a seal, introduce a filter membrane into a chamber, or simply act as a lid to seal a chamber if required.

The apparatus can also be adapted for the chemical processing of a fluid sample in conjunction with interaction with the functional component as set out above. In any chamber the analyte can either interact with a functional reagent or can be subjected to physical processing or both. As such it is possible to design the apparatus such that the analyte can be subjected to a series of processing steps as required by the pre-determined protocol. As already described the functional component can be utilised to move the analyte from chamber to chamber on a platform thereby allowing it to react with one or more functional reagents in turn. Alternatively, it could be used to move one or more reagents and deposit them into the sample chamber in turn thereby subjecting the sample to a series of chemical manipulations.

It can therefore be seen that an apparatus according to the present invention is very flexible and as such can be designed to perform a wide series of different fluid sample manipulations. However the apparatus is particularly suitable for processing of a fluid sample comprising a biological analyte prior to amplification of the analyte by a nucleic acid amplification reaction or alternatively an immunoassay or alternatively an assay involving bioluminescence or furthermore a DNA sequencing assay especially pyro-sequencing.

The apparatus can be enhanced in several ways. These include that the platform may be essentially circular and move by rotation; the apparatus may comprise more than one functional component thereby increasing the potential sample manipulation possible; the apparatus may additionally comprise one or more further physical processing means which, rather than being located on the platform, are located above the platform and can be lowered into any given chamber as required; one or more of the chambers may be disposable such that they can be removed and replaced to prevent cross sample contamination; one or more of the chambers may be preloaded with any functional reagents to reduce complexity; and that the apparatus is linked to a control means such that its operation is fully automated. Designing the apparatus to have one or more removable chambers has the additional advantage that several chambers of identical dimensions can be manufactured and then each filled separately with the necessary reagents for a different protocol. The user can then select and insert the desired chamber for use in each instance thereby increasing the usefulness of the apparatus.

This apparatus has several advantages. These include that by designing the apparatus such that the platform moves, the arm itself need only move in a single dimension, thereby reducing complexity. A further advantage of this apparatus is that the platform can comprise a variety of functional components for example a heater, a foil cutter, a sonicator, and yet by the use of a single arm able to removeably attach to each of these, each in turn can be manipulated to interface with one or more chambers also located on the platform to operate a pre-determined sample processing protocol. The apparatus is flexible such that its operation can be readily adjusted for a variety of different protocols as desired. Furthermore a complex sample processing sequence can be established without the need for an apparatus comprising fluid pathways and

pumps to move sample through the apparatus. This also eliminates the likelihood of reagents mixing with one another during the protocol. Other advantages include that the apparatus can be fully automated reducing user error, sample contamination and user risk. Furthermore the apparatus can be designed to be fully portable for use in the field.

It is an object of the present invention to develop an apparatus, and associated method, for processing a fluid sample. It is a further object of this invention to design such an apparatus which is capable of subjecting a fluid sample to a series of sequential chemical or physical processing steps in a pre-determined sequence, preferably to purify and concentrate a fluid sample prior to a nucleic acid amplification reaction. It is another object of this invention to design such an apparatus to be as flexible as possible, to be simple to use by a worker with little or no laboratory training in a non-laboratory environment with reduced user exposure to sample, chemicals or waste. It is yet another object of this invention to design the sample components of the apparatus to be cheap to manufacture such that they can be disposed of after a single use reducing cross contamination of samples and eliminating the need for sterilising large amounts of equipment. These, and other objects of this invention, will become apparent in light of the following disclosure.

### Summary of the Invention

According to a first aspect this invention relates to apparatus for processing a fluid sample comprising:
(i) a platform comprising:
   (a) a chamber suitable for receiving a sample; and
   (b) a functional component;
(ii) an arm capable of being raised and lowered and including a means for removeably attaching to the functional component such that said component may be raised and lowered with the arm; and
(iii) a means for moving the platform such that any chamber or functional component may be aligned with respect to the arm.

According to a second aspect this invention relates to the use of an apparatus according to the present invention for the processing of a sample prior to a nucleic acid amplification reaction.

According to a third aspect this invention relates to of processing a fluid sample wherein the method comprises:
(i) placing a sample comprising an analyte into a first chamber located on a platform of an apparatus;
(ii) binding the analyte to a binding material to form an analyte - binding material complex;
(iii) lowering a means for reversibly attracting said complex into said first chamber and allowing the complex to be attracted to said means;
(iv) raising said means from the first chamber;
(v) moving said platform such that a second chamber is now aligned with the means for reversibly attracting said complex;
(vi) lowering said means for reversibly attracting said complex into the second chamber and allowing the complex to detract from said means;
characterised in that the analyte is subjected to a physical processing step either in the first chamber or in the second chamber.

According to a fourth aspect this invention relates to the use of a method according to the present invention for the processing of a sample prior to a nucleic acid amplification reaction.

According to a fifth aspect this invention relates to the use of a binding material in a method according to the present invention for the processing of a sample prior to a nucleic acid amplification reaction.

According to a sixth aspect this invention relates to a lid, suitable for closure of a vessel, said lid comprising a membrane and characterised in that said membrane is recessed within the lid.

### Detailed Description of the Invention

All publications cited herein are hereby incorporated by reference in their entirety, unless otherwise indicated.

As used herein the term "fluid sample" means any sample that exists as a gas, a liquid, a solution comprising a sample solvated by a solvent, or a fluid system comprising one or more phases for example an emulsion. A "fluid sample" is also taken to mean a sample which may initially be introduced into the apparatus as a solid or a viscous liquid but which is then dispersed or dissolved by the adding of a volume of solvent. Similarly a "fluid sample" is also taken to mean a gas sample which is passed through a cyclone during which particulate matter in the gas sample is suspended in a suitable solvent. Examples of samples include, but are by no means limited to, a fluid sample collected from the environment such as a river, a fluid sample collected from a patient such as a urine sample, a viscous sample collected from a patient such as a swab, a fluid sample collected when air is passed through a cyclone such that particulate matter in the air is entrained into a fluid collecting chamber, such as that described in WO 02/29380 and the like.

As used herein the term "functional agent" means a solid chemical, biological or physical agent that is used in the apparatus or method of the present invention. It may comprise one or more chemical or biological reagents dosed as a solid powder, bead, capsule, pressed tablet and the like. Suitable examples of reagents include, but are not limited to, lysis reagents for example chaotrophic salts, nucleic acid targets, nucleic acid synthetic controls, bacteriophage, lyophilised enzymes, dyes, detergents, antibiotics, antibodies and the like. Such a reagent may also be processed such that it comprises a solid phase binding material capable of binding to an analyte in the fluid sample, for example a magnetic particle optionally coated with an antibody or similar. However, the term functional agent should also be understood to comprise physical means for interacting with the fluid sample. These could include, but are not limited to, a stirrer bead, a sonicator, a heating means, and the like.

As used herein the term "functional component" shall be taken to mean an element of the apparatus that has been designed such that it can reversibly attach to the arm of the apparatus. The functional component can be designed to have a wide variety of uses as will be apparent from the disclosure herein. The specific use of one or more functional components can be readily identified by one skilled in the art depending on the specific use of the apparatus. For example the functional component may comprise a means for interacting with the fluid sample. Such a means may provide some physical processing to the sample for example heating, cooling, optics, sonication, and the like. Alternatively the functional component may comprise a means for interacting with the chamber itself, for example by acting as a cutter to pierce a foil seal, to cap the chamber, to introduce a filter and the like. Furthermore the functional component may act as a collector for moving the sample, or an analyte contained therein to another chamber of the apparatus.

The elements of the apparatus are described in more detail below.

This invention relates to an apparatus for processing a fluid sample comprising:
(i) a platform comprising:
   (a) a chamber suitable for receiving a sample; and
   (b) a functional component;
(ii) an arm capable of being raised and lowered and including a means for removeably attaching to the functional component such that said component may be raised and lowered with the arm; and
(iii) a means for moving the platform such that any chamber or functional component may be aligned with respect to the arm.

The apparatus is designed such that it is suitable for subjecting a sample to one or more processing steps. These processing steps can include chemical processing steps such as diluting the sample, washing the sample sequentially with one or more buffer solutions, reacting the sample with one or more chemical reagents, but may also include physical steps for example radiating the fluid sample with thermal radiation, subjecting the fluid sample to acoustical processing and the like.

The apparatus comprises a platform that in turn comprises a first chamber and a functional component. The chamber may also be known as the sample chamber since this is the chamber into the chamber into which the sample, preferably a fluid sample and more preferably comprising an analyte, is first introduced into the apparatus. The sample chamber can optionally be integrated into the platform of the apparatus, or alternatively may be removable from the platform such that it can be filled with the sample elsewhere and then placed into the platform.

The functional component is designed such that it can be removeably attached to the arm of the apparatus. It is preferred that the arm and the functional component can be attached to each other through operation of the apparatus without the need for any user interaction in order that the operation of the apparatus can be fully automated. It is also preferred that the arm mechanically removeably attaches to the functional component. Several different designs are possible. One simple solution is that any functional component is designed to comprise a lip under which a forked component of the arm may slot. Once the arm is in position the movement of the arm in an essentially vertical direction allows for movement of the functional component in essentially the same direction. One advantage of this design is that the movement of the platform can be used to interface the fork of the arm with the lip of the functional component. It is also necessary that any functional component is not permanently fixed to the platform of the apparatus but is instead held in place on the platform of the apparatus in a manner which allows it to be released when required. Again many different designs are possible. One example is that the platform simply comprises a hole into which the functional component is dropped and that the functional component comprises a lip to prevent it falling through the platform.

The apparatus also comprises an arm capable of being raised and lowered and capable of removeably attaching to the functional component. The design of the arm will depend in part upon the design of the means for attaching the arm to the functional component. As set out above it is preferred that the arm is designed such that it is capable of mechanically attaching to the functional component. One example of a simple design is that the arm comprises a fork at the base of the arm that is in a plane at right angles to that of the arm itself and which can fit around the functional component. It is preferred that the slot and insertion means are orientated in a manner essentially perpendicular to the movement of the arm such that no further means of attaching the arm and the functional component are required.

It is preferred that the apparatus comprises a means for raising and lowering the arm preferably in a substantially vertical direction. The means is preferably a mechanical means that is preferably operated electrically. The path of movement of the arm should be as simple as possible. It is preferred that the arm simply moves in a single dimension up and down with respect to the chamber. The design of the apparatus, allowing the platform itself to move, ensures that there is usually no further requirement for the arm to move once it has been raised or lowered in order to adjust its orientation with respect to the platform or any functional component or chamber thereof.

The apparatus also comprises a means capable of moving the platform such that the position of any given component of the platform can be altered with respect to the position of the arm. In the case of the situation where the platform is arranged such that the functional components and the chambers are aligned linearly on a platform the platform itself moves in a linear direction from side to side to appropriately align the functional components or chambers. Alternatively if the platform is arranged such that the functional components and chambers are arranged in an array on the platform the means will translate the platform to appropriately align the functional components or chambers. Alternatively again if the platform is designed such that the functional components and the chambers are arranged in a circular fashion on the platform, the platform will rotate to appropriately align the functional components or chambers. This not only has the advantage of simplifying the mechanics for the movement of the arm but also allows that, in an apparatus designed for use in a complex multi-step sample processing reaction, other physical processing means can also be positioned above the platform to be lowered into the chambers as required. If the platform itself were not able to move, then the arm and any additional physical processing means would need to be programmed using complex three dimensional mechanics to both orientate with the desired platform functional component or chamber in the correct sequence and then to be lowered and raised towards the platform as required.

The platform itself can have any size and shape. However it is preferred that the platform is essentially circular and able to move by rotating to align the chambers or functional components with respect to the arm or other physical means. This also has the advantage of minimising the size of the apparatus when several different components are involved. Optionally the platform can be fitted with a sensing mechanism to allow for correct positioning of the functional component or chamber as the platform moves under the arm or other physical processing means located above the platform.

As set out above the functional component can have a wide variety of different uses. On the one hand it can comprise a component which is designed to interact with the sample. For example it may comprise a sonicator, heater, optical detector, means for providing an optical signal and the like which is stored on the platform. When required the functional component is raised by the arm of the apparatus, lowered into the desired chamber and operated as necessary. In such instances it may be useful if the connection between the functional component and the arm of the apparatus were also to provide an electrical connection sufficient to provide power to the functional component during use.

Alternatively the functional component may be designed to interact with a chamber located on the platform. Again there are many different interactions which are possible depending on the desired use of the apparatus. Examples include that the functional component may be designed such that it can operate as a cutter to pierce any seals or membranes that are present on any chamber of the apparatus. It is preferred that any such cutters are designed to include a slit in the cutting means such that if they are used to cut a seal of a chamber comprising a fluid sample the fluid sample does not get sucked into the cutter itself and held there by surface tension. Alternatively the functional component may be designed to comprise a filter which can be lifted into place by the arm and fitted onto the top of a chamber as required. Optionally it may be designed to comprise a lid that can be again fitted onto the top of a chamber if required. Furthermore a given position on the platform can comprise several such functional components stacked on top of each other in a given position on the platform wherein each can be moved in turn by the arm of the apparatus.

Furthermore the functional component may be used to move either the analyte or a reagent from one chamber on the platform to another chamber on the platform. In one embodiment such a functional component is used in conjunction with a solid phase binding agent suitable for binding the analyte or reagent as desired into a complex. The solid phase binding agent and the analyte or chemical reagent are placed into contact with each other such that a complex can be formed. The functional component used for moving the complex is then attached to the arm of the apparatus and lowered into the first chamber as described. The complex is attracted to the functional component, the functional component is raised, the platform moves such that a second chamber is now positioned under the arm, the functional component lowered and the complex released thus moving the bound material from one chamber to another. Since it is necessary for the functional component to be able to remove the complex from the first chamber, the nature of the functional component will depend on the binding material that has been used. Furthermore it is necessary that the functional component is able to deposit the complex into a second chamber of the apparatus and as such the interaction between the functional component and the bound complex must necessarily be reversible. It is preferred that the functional component is able to move the binding agent both when it is in a complex with the analyte and also the binding agent alone. This has the result that not only can the functional component be used to move the complex from one chamber to another, but also has the advantage that it can add or remove the binding agent to or from any given chamber if required.

A wide variety of different solid phase binding materials may be used provided that they are able to bind the target analyte to form a complex. Suitable binding materials can be readily determined by one skilled in the art and will depend on the analyte and the protocol. Examples include silica beads, salts, reagents containing antigens capable of binding antibodies or DNA binding proteins and the like. The binding of the analyte to the binding material can occur in a number of ways. The analyte may be adsorbed to the surface of the binding material, alternatively is may be absorbed to the surface of the binding material, alternatively the analyte may be attracted to the binding material by Coulombic charges, alternatively formal chemical bonds may develop between the binding material and the analyte or alternatively the binding material may comprise biochemical binding sites capable of binding the specific analyte in question. Any binding mechanism is suitable for the present invention provided that the binding is sufficiently strong such that the binding material is moved from one chamber to another that the analyte remains attached to the binding material. It is preferred that the binding of the analyte to the binding material is reversible such that in the reaction chamber the analyte can be freed from the binding material for further chemical or physical processing. Any suitable means can be used for removing the analyte from the binding material including warming, dilution, dissolving (solubilising) and the like. The binding material can optionally be present in a chamber prior to the addition of the material in question, alternatively it can be added to a chamber after the addition of the material, or furthermore in the case of a reagent the reagent may be formulated such that it comprises the binding agent already.

It is preferred that the binding material comprises magnetic silica beads. Suitable beads include those supplied by Roche, Promega and Estapor. As such it is preferred that the functional component itself is a magnet to which the beads are attracted or alternatively that it can be used in conjunction with a magnet to which the beads attract. It is therefore preferred that the functional component comprises a sheath which provides an interface between the means for attracting the complex and the complex itself. Preferably the sheath is located on the platform and is made of a material such that when the magnet is inside the sheath the complex will be attracted to the sheath. In such an embodiment it is preferred that the apparatus comprise a magnet co-located with the arm of the apparatus that can be lowered into the sheath to apply a magnetic field and raised out of the sheath to remove the magnetic field. The sheath is then placed into a chamber of the apparatus comprising the bound complex. The magnet is lowered into the sheath and the complex binds to the sheath. The sheath and magnet are then raised. The platform moves such that a new chamber is aligned, the sheath and magnet are then lowered and the magnet removed. When the magnet is removed the complex will fall away from the sheath into the second chamber. Small movements of the sheath up and down by the arm will ensure that no complex remains bound to the sheath and will also act to mix the complex with any reagents or solutions in the new chamber. Alternatively the analyte can be eluted from the beads by any suitable means. If the apparatus is designed to comprise such an embodiment it is necessary that the magnet and the arm are designed to interact with each other without affecting the operation of the other such that the sheath can be independently raised and lowered with or without the magnet in place. This operation can be repeated to remove either the complex or the beads themselves during the protocol.

It is preferred that the apparatus is designed such that one or more components of the apparatus can be detached from the platform and removed from the apparatus. This allows for chambers to be readily replaced either during the operation of the apparatus or before or after use. For example a fluid sample could be remotely loaded into a sample chamber and the sample chamber then loaded into the platform of the apparatus of the present invention. Alternatively following the processing of the sample it may be useful if the final chamber, comprising the processed analyte, can be readily removed from the apparatus of the present invention further manipulation or processing of the material elsewhere. Similarly it may be useful if one or more components of the apparatus can be alternated depending on the specific use of the apparatus. For example one of the chambers may comprise a pre-dispensed reagent, the specific required reagent depending on the test procedure in question. If such a chamber can be readily exchanged the user could chose the required chamber and load it into the apparatus prior to use. If the platform comprises such exchangeable chambers it is preferred that the apparatus comprises a locking means for securing the chamber in position during use such that the chambers do not move during the movement of the platform. Furthermore it is useful if such exchangeable chambers are colour coded or marked with a bar code and the like such that the user can identify which chamber is required for which use. The apparatus can optionally comprise a bar code or similar reader the apparatus itself can identify the chamber being used and use this information to select one of several pre-programmed sample processing cycles.

It is also preferred that the apparatus be designed such that the whole platform can be removed and readily replaced. This allows that after any given sample processing sequence the used and potentially contaminated platform can be removed and replaced to allow use of the apparatus in a further procedure. If the apparatus is so designed it is preferred that the platform can be readily and securely mounted into the apparatus for easy of use for example using a twist fit with a simple lock.

The apparatus of the present invention may also comprise optionally comprise one or more further chambers. Depending on the use of the apparatus these further chambers may have several roles. An example of such a chamber would include one or more chambers comprising a buffer solution or water which are required in the sample processing protocol for diluting or washing the sample or alternatively for washing a functional component either before or after use to prevent contamination passing from one sample to another or one chamber to another. Alternatively the apparatus may comprise a chamber comprising any specific reagents required in for the pre-determined sample processing, for example a cell lysis agent such as chaotrophic salts. Such chambers can be pre-filled with the required solutions or reagents during manufacture to prevent user error, to minimise equipment required in the field, to prevent sample contamination and to minimise risk to the user from hazardous materials. The number of chambers required and the reagents required will be dependent upon the chosen pre-determined sample processing protocol. These chambers can be used in the protocol by moving the analyte from one chamber to another as described. Alternatively the reagents can be moved from one chamber to another again as described. If both analyte and reagents are to be moved during a given protocol it is preferred that the binding complex is the same in each case such that a single functional component is required to move the materials. Optionally the apparatus could be designed such that one or more reagents is dried, preferably freeze dried, onto the outer surface of a functional component or alternatively that one or more reagents are freeze dried onto the outside of a suitable removable attachment which can be moved by the functional component. As such the reagents can be introduced into the sample processing protocol by the functional component or suitable removable attachment being lowered into a chamber and the reagents being solubilised from the outside of the functional component. The suitable removable attachment can be for example simply a plastic body with a metal tip which can be moved by use of a magnetic functional component and to which reagents can be freeze dried on the outer surface. Such a functional component or suitable removable attachment can be batch prepared and it overcomes the problem of release of small magnetic beads which is sometimes hindered due to the surface tension created. A further enhancement is that the reagents may be freeze dried at different heights on the functional component or sheath such that each may be solubilised in turn by progressive lowering of the freeze dried material into the desired chamber. This allows for different reagents to be solubilised in turn or alternatively different amounts of a given agent to be solubilised in turn such that it can effectively be added to a reaction mixture over time. This again further enhances the flexibility of the design of an apparatus according to the present invention for any given protocol.

Optionally the apparatus may therefore comprise several different populations of solid phase binding complex wherein one or more different reagents and or analyte is bound to each population. It is useful if such different populations, whilst maintaining essentially the same characteristics in the solid phase binding material, comprise small differences to allow for ready separation of the different populations. For example the populations may differ in their magnetic properties allowing for separation of those with stronger magnetic properties from those with weaker properties from each other using the same functional component and apparatus design but simply by varying the strength of the magnetic field applied. Alternatively the populations may differ in their size, electric charge, fluorescence properties, or properties when a vortex is applied such that each of these could be used to separate different populations within an apparatus according to the present invention. This further enhances the possibilities of the apparatus as unit for performing a given sample preparation protocol.

Suitable reagents that may be used in one or more chambers of the apparatus include buffer solution selected from the group consisting of an aqueous solution of potassium acetate and Tris.hydrochloride, or an aqueous alcoholic solution of potassium acetate and Tris.hydrochloride or an organic solvent or mixtures thereof; a lysis reagent such as chaotrophic salts; a reagent comprising one or more nucleic acid amplification reagents, more preferably a reagent selected from the group consisting of nucleic acid primers, nucleic acid probes, fluorescing dyes, enzyme buffers, nucleotides, magnesium salts, bovine serum albium, antibodies, and denaturants.

Suitable chambers for use in the present invention may include those that comprise several different areas, separated by a membrane and integrated into a single unit for ease of selection by the user. For example the sample chamber may also be integrated with a second chamber containing the necessary reagents for a given protocol. Alternatively a chamber may comprise two areas separated by a membrane which can be pierced. This allows a first manipulation step to occur in the first area, the membrane to be pierced, the material being processed to enter the second area and then a second manipulation step to occur in a second area.

Furthermore one or more chambers of the apparatus may also be designed such that they too can be removeably attached to the arm of the apparatus. This allows that if required a chamber can be mechanically removed from the apparatus. Optionally the platform may be designed to have a recess such that any chamber removed from the platform can be lowered, by means of the arm, through the recess such that it can either directly interface with a further apparatus or be removed from the apparatus manually by the user.

It is preferred that any chambers for use in the apparatus, especially those comprising pre-dispensed reagents, are sealed at the point of manufacture to prevent contamination or degradation of the materials prior to use. If a chamber comprises one or more different chambers separated by a membrane it is preferred that each is sealed separately so that they can be opened individually. A preferred means for sealing such chambers is by use of a metal seal, preferably a laminated metal seal. Alternatively the sample chamber may comprise a lid which is sealed such that after collection of the sample in the field the lid may be closed to prevent contamination prior to insertion of the sample chamber into the apparatus. It is preferred that such a seal is recessed into the lid of the apparatus so that when the lid is closed, the thumb or finger of the user does not come into contact with the seal while the lid is being closed. This prevents contamination from the user inadvertently contaminating the sample that could then lead to a false test result. This is particularly important where the user has collected a variety of samples from different locations or the samples involve biological material that could be present on the skin of the user. Such a lid could have the seal recessed from the side of the lid which comes into contact with the user whilst the lid is being closed. Preferably the seal is recessed from both sides of the lid such that the seal does not contact with the user accidentally before or during closure of the lid. As such this invention also relates to a lid, suitable for closure of a vessel, said lid comprising a membrane and characterised in that the membrane is recessed within the lid. Any seals can either be removed by the operator prior to use of the chamber. Alternatively the apparatus can comprise a cutter which is able to operate mechanically to pierce any seals as required as described set out above.

One or more of the chambers of the apparatus may optionally comprise a trapping member. Suitable trapping members include a microfluidic chip, a solid phase material, a filter, a filter stack, an affinity matrix, a magnetic separation matrix, a size exclusion column, a capillary tube and mixtures thereof. These can be used to filter a sample when it is initially introduced into the apparatus or alternatively to provide a filtration step during the sample processing protocol if required.

As already set out the processing of the sample may include physical processing steps. Such steps can include thermal, acoustic, optical, sonicating, electrical processing, sensing or monitoring techniques and the like. Such physical processing steps can be delivered in a number of different ways. As set out above these may be delivered to the sample within a chamber using a functional component which has been stored on the platform and moved by the arm of the apparatus as described. Preferably the apparatus may comprise one or more physical processing means which are positioned within the apparatus above the platform in a manner similar to the arm of the apparatus. Such means are ideally designed such that they can be lowered into a given chamber, located directly beneath the means, as required and then removed from the chamber when no longer required. Since the platform of the apparatus is able to move, it can also move to position any given chamber with respect to such a physical processing means. Optionally the apparatus comprises a means for ensuring that the platform is correctly positioned with respect to these additional physical processing means if required. Examples of such means include, but are not limited to, means for heating the contents of a chamber, a means for sonicating the contents of a chamber, a means for introducing an optical signal into a chamber, a means for detecting an optical signal from a chamber, a means for introducing an electrical signal into a chamber and the like. It is preferred that the apparatus comprise one or more of the following a means for heating or a means for sonicating the contents of the chamber. These are particularly useful when the apparatus is used for processing a sample comprising biological material prior to amplification.

Alternatively a given chamber of the apparatus may be modified such that any material it contains can undergo the physical processing either directly in the apparatus, or when the apparatus is modified to include the required additional components or if the chamber is designed to be used in conjunction with a further piece of apparatus. For example if the sample needs to be heated during processing the walls of the chamber may comprise heating elements which allow their contents to be warmed, or alternatively they may be coated with an electrically conducting polymer such as that disclosed in WO98/24548 such that the chamber can be heated by applying an electrical current. Furthermore the walls of one or more chambers may be flexible to allow acoustic processing, or alternatively they may be transparent to one or more wavelengths of light to allow optical processing, sensing or monitoring. If such physical processing is required the apparatus should be designed such that the chamber is positioned for easy and efficient access to any means required for the physical processing. When the apparatus is used to processing a sample comprising biological material prior to a nucleic acid amplification reaction it is preferred that one of the chambers is both coated with an electrically conducting polymer and has a transparent window such that this chamber can be used for the conducting and real time monitoring of the amplification reaction.

If the apparatus comprises a chamber in which a material is to be heated or cooled it is preferred that the chamber has a high surface area to volume ratio such that rapid heat exchange can occur. One example of such a chamber is a capillary tube. These are ideal for the rapid heating or cooling of small volumes of fluid samples. However, due to the surface tension of a fluid sample it can be difficult to load the fluid sample into a capillary tube. It is therefore optionally preferred that the platform can be rapidly rotated so that the fluid sample can be introduced into the capillary tube by centrifugal force. This provides a further advantage of having an essentially circular platform. If the apparatus is used in this way it is preferred that all chambers containing fluid are designed with a recess such that any fluid within such chambers is not released during the rotation of the platform. It is additionally preferred that one or more of the chambers is mounted on the platform using a pivot such that it can swing freely whilst the platform is rotating such that the fluid can be driven into the capillary tube.

Therefore as set out above, the apparatus of the present invention may optionally be designed to comprise a functional component, including a physical processing means, which is either cited on the platform and which can be moved to operate in the sample processing by use of the arm. Alternatively it may comprise physical processing means located above the platform which can interact with a given chamber by being mechanically lowered into the chamber as set out. It is preferred that those means which are expensive and require power to operate are located permanently within the apparatus above the platform, for example a means for heating a sample, a means for sonicating a sample and the like. To prevent sample contamination between use of the apparatus these means should be cleaned. Alternatively the platform may comprise chambers comprising cleaning reagents into which the means can be lowered after use and this washing can be integrated into the automated operation of the apparatus. Similarly it is preferred that those functional components which can be readily designed to be disposable are located on the platform and are moved with the arm of the apparatus. As such, at the end of the operation of the apparatus, the entire platform including its constituent components can be removed from the apparatus and disposed off. This minimises sample contamination. Examples of such components include cutters, sheath for movement of a bound analyte binding material complex, filters, lids and the like.

The apparatus may optionally be integrated with further means for manipulation of the analyte in question or monitoring the analyte. For example the apparatus may comprise an optical system capable of detecting one or more materials in the reaction chamber. If the apparatus comprises an optical detector, or is to be used in conjunction with an optical detector, it is preferred that the optical detector can be light sealed to ensure that the detection can proceed without interference from incident light.

The apparatus itself can have a wide variety of different designs, shapes, sizes and can be made of many different materials depending on the specific use. In order to minimise the cost of the apparatus and to ensure that it is economically viable it is preferred that the chambers are manufactured from a cheap material such as a thermoplastic material for example polyethylene or polypropylene, polycarbonate, acrylic, nylon or butadiene-styrene copolymer or mixtures thereof. The apparatus or its component parts can be transparent or translucent or opaque. Advantageously any chambers can also be colour coded to help direct the unskilled user as to the correct use of the apparatus.

It is preferred that the apparatus is portable such that it can be used in the field. As such it should be light weight, be of a simple design, require the minimum power and should ideally be designed to be used in extremes of temperature. It is preferred that the apparatus be designed to operate effectively in a temperature range of from about -30°C to about +50°C.

It is also preferred that the operation of the apparatus is fully automated. This has several advantages including ease of use and reduced user error. In order to automate the apparatus it is likely that it will need to interface with an internal or external computer or other suitable control means that has been suitably programmed. Optionally the control means can be chosen such that it can be programmed with more than one protocol and the user can chose the desired protocol from a suitable optional interface. If the apparatus is so automated it is preferred that it comprises a control means for programming and control of for example the thermal cycling of sample chamber and also for control of optics. Preferably the sequence of the automation is designed to minimise the time required for processing a sample.

Embodiments of the invention facilitate processing of a fluid sample according to a pre-determined protocol.

This invention also relates to the use of an apparatus according to the present invention for the processing of a sample prior to a nucleic acid amplification reaction.

According to a further aspect, this invention relates to a method of processing a fluid sample wherein the method comprises:
(i) placing a sample comprising an analyte into a first chamber located on a platform of an apparatus;
(ii) binding the analyte to a binding material to form an analyte - binding material complex;
(iii) lowering a means for reversibly attracting said complex into said first chamber and allowing the complex to be attracted to said means;
(iv) raising said means from the first chamber;
(v) moving said platform such that a second chamber is now aligned with the means for reversibly attracting said complex;
(vi) lowering said means for reversibly attracting said complex into the second chamber and allowing the complex to detract from said means;
characterised in that the analyte is subjected to a physical processing step either in the first chamber or in the second chamber.

It is preferred that the physical processing step is a sonication step or alternatively that it is a heating step. Furthermore it is preferred that the method and any related apparatus are also designed such that the sample can be additionally subjected to a chemical processing step. As such this ensures that the method can be flexibly adapted to accommodate a wide range of different sample processing protocols.

According to an even further aspect this invention relates to the use of a method according to the present invention for the processing of a sample prior to a nucleic acid amplification reaction. As a first step it is usual to need to lyse any cellular material within the sample to release the nucleic acid material. The lysis can optionally be performed by a chemical lysis step for example using a chaotrophic reagent such as guanidine hydrochloride, or alternatively a physical lysis step for example using a sonicator or both. Sonication of a sample is particularly useful for the initial disruption of spores that may be present. It is then preferred that the analyte is moved through two different chambers each comprising a buffer to wash the analyte the buffer comprising ethanol optionally with detergent and other optional reagents for example tris hydrochloride. Several PCR reagents are then added to the sample for example primers, probes, fluorescent dyes, enzymes, nucleotides, and the like. The nucleic acid material is optionally eluted from the binding material by the use of a small volume of preheated water into which the other amplification reaction reagents solubilise. Finally the reaction mixture is subjected to thermal cycling with optional real time optical analysis to monitor the amplification reaction and positively identify the target.

According to an even further aspect this invention also relates to the use of a binding material in an apparatus according to the present invention for the processing of a sample prior to a nucleic acid amplification reaction.

### Figures

Figure 1 shows a perspective view of the apparatus.
Figure 2 shows a transverse cross section of the complete apparatus from the side.
Figure 3 shows a birds eye view of the platform.
Figure 4 shows a cross section view of the operation of a functional component, here a cutter, piercing a laminated membrane on a chamber of the apparatus.
Figure 5 shows a view to illustrate the detail of the attachment of a functional component, here a cutter , to the fork of the arm.
Figure 6 shows a cross section view of the operation of a functional component, here a sheath, with a magnet to withdraw bound analyte from the sample chamber.
Figure 7 shows a cross section view of the operation of a physical processing means, here a means for heating, to heat a volume of solution in one of the chambers of the apparatus.
Figure 8 shows a cross section view of the operation of a functional component, here a sheath, with a magnet to release the bound analyte into the reaction chamber.
Figure 9 shows a cross section view of the reaction chamber, here with a functional component, here the cutter, in position to seal the reaction chamber.
Figure 10 shows a cross section of a lid of the present invention with a recessed seal.

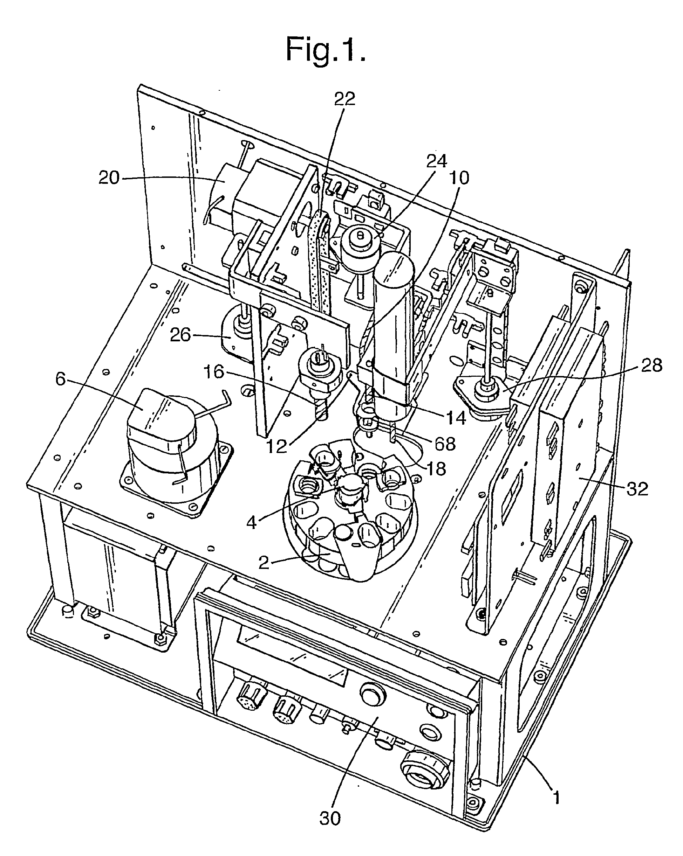

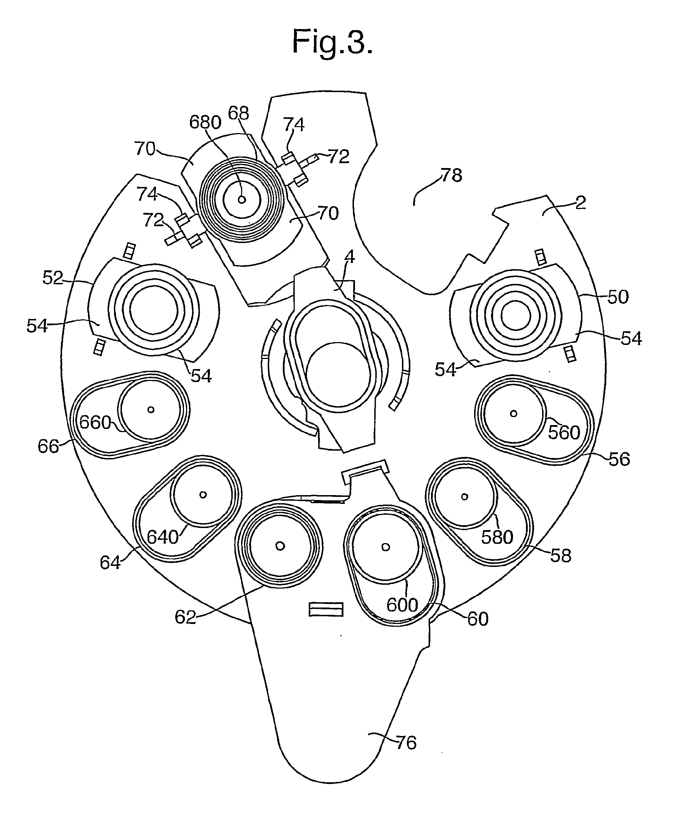

Figure 1 shows perspective view of the apparatus 1. The apparatus comprises a platform 2 held in position by a twist lock 4. The platform comprises several chambers and functional components (detailed in Figure 3). The platform rotates driven by a stepper motor 6 and a drive belt (not shown). The position of the platform is monitored using an index sensor (not shown) also by monitoring the movement of the stepper motor 6. Located above the platform 2 is the arm 10 that comprises a fork 12 for removeably attaching to functional components (not detailed) on the platform 2. The arm 10 is shown in a raised position holding a chamber 68 above the platform 2. The apparatus also comprises a magnet 14 that is located directly above the fork of the arm 12. The magnet 14 is shown in the raised position. The apparatus also comprises a heating means 16. This is also located above the platform 2 and shown in a raised position. Furthermore the apparatus comprises a means for sonicating a sample 18 again located above the platform 2 and shown in a raised position. The linear movement of the arm 10 and the magnet 14 is driven by a motor 20 attached to a drive belt 22 and controlled by a linear actuator 24. The linear movement of the heating means 16 and the means for sonicating a sample 18 is similar driven by motor 20 attached to drive belt 22 and individually controlled by linear actuators 26 and 28 respectfully. The apparatus also comprises a control panel 30 and a power source 32.

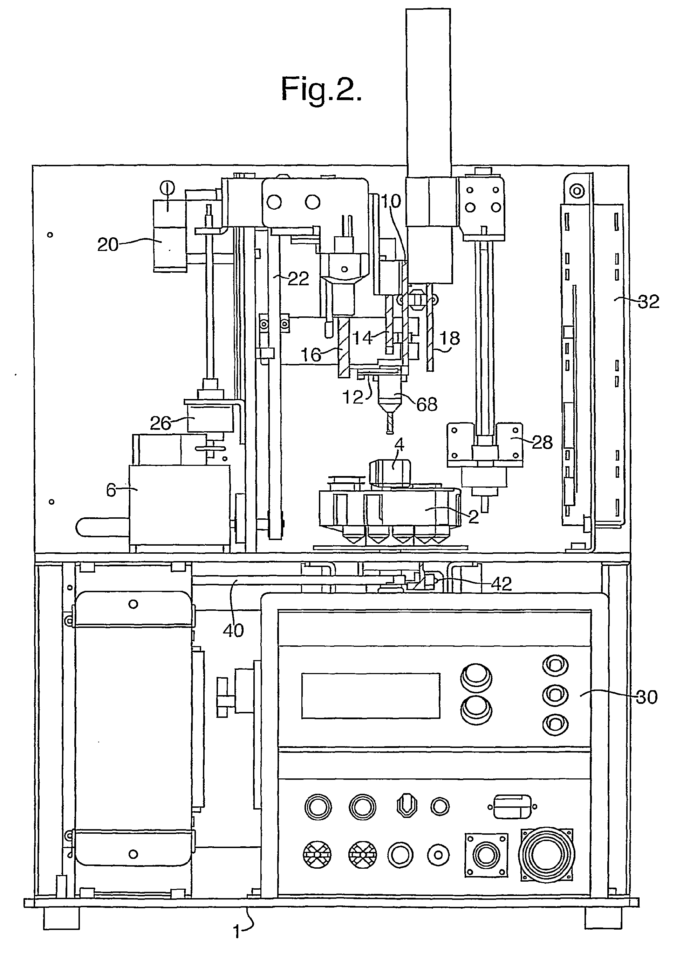

Figure 2 shows a transverse cross section of the apparatus of the present invention. The components shown are the same as those shown in Figure 1 except that linear actuator 24 can not be seen from this view. This view additionally shows the drive belt 40 attached to motor 6 for rotating the platform and sensor 42 for sensing the position of the platform.

Figure 3 shows a birds eye view of the platform 2 of the apparatus which has been designed for processing a fluid sample prior to nucleic acid amplification. The platform is mounted on the apparatus using a twist lock mechanism 4. The platform comprises two functional components, a cutter 50 and a sheath 52. Each functional component comprises a lip 54 on either side that allows the functional component to interact with the arm of the apparatus (not shown). The lip is orientated such that as the platform rotates the forked component of the arm is able to slide under the lip of the functional component. The apparatus also comprises several chambers, 56, 58, 60, 62, 64, 66 and 68. Each of these chambers has a different role as set out below. Chambers 56, 58, 60, 64, 66 are oval in cross section and comprise a circular well recess at the bottom of the chamber 560, 580, 600 and 640 respectively. Chamber 62 is circular in cross section. Chamber 68 is circular in cross section narrows to a capillary tube at the base of the chamber indicated by 680. Chamber 68 additionally comprises a lip 70 that allows the chamber to interact with the arm of the apparatus (not shown). Chamber 68 is mounted in the apparatus using spindles 72 mounted in sockets 74. Chambers 60 and 62 are mounted together in a single container 76. This container 76 is detachable from the platform. The platform also comprises a cut away section 78.

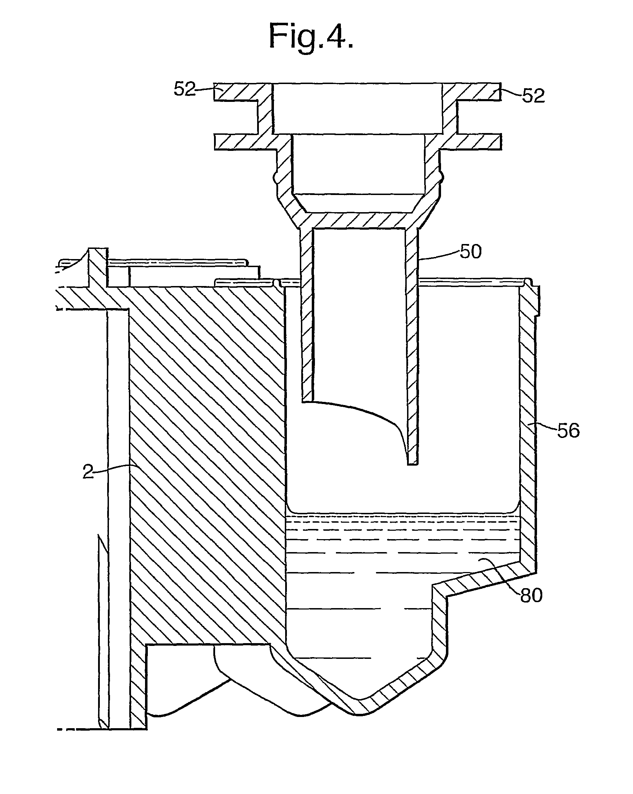

The use of the apparatus and the platform for the processing of a fluid sample prior to nucleic acid amplification is set out below with reference to the above figures and additionally figures 4 to 9.

A container 76 comprising sample chamber 60 is selected based on the chosen assay. Chamber 62 is preloaded with several reagents required for said assay. A fluid sample comprising a DNA analyte is collected and placed into the sample chamber 60. The sample chamber is preloaded with a chemical lysis reagent guanidine hydrochloride. Magnetic binding beads 100 are then added to the sample and the lid of the sample container is closed. The container 76 comprising sample chamber 60, sample and reagent chamber 62 is loaded onto platform 2. Platform 2 is then loaded into the apparatus 1 and locked in place using twist lock 4. The arm 10 is lowered and the platform 2 rotated such that the fork 12 engages underneath the lip 52 of cutter 50. The arm 12 is then raised and the platform 2 then rotates such that chamber 56 is located under the cutter 50. The arm is lowered and cutter 50 pierces the laminated metal membrane (not shown) covering chamber 56. This is repeated such that the cutter 50 sequentially pierces the membranes covering chambers 58, 60, 62, 64, 66 and 68.

Figure 4 shows a cross section view of the operation of a functional component, here a cutter 50, piercing a laminated membrane (not shown) on to top of a chamber, for example 56, of the apparatus. The chamber 56 is attached to the platform 2. The figure illustrates the lip of the functional component 52 that is used to engage with the fork of the arm (not shown).

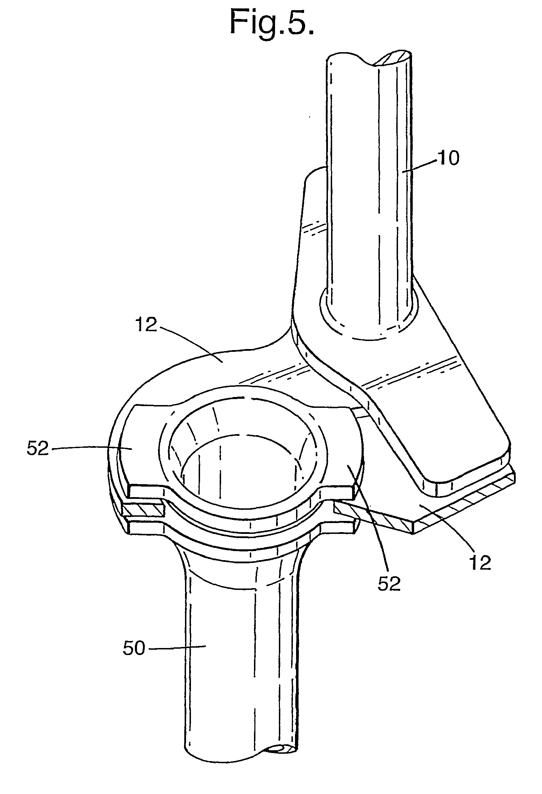

Figure 5 shows a view to illustrate the detail of the attachment of a functional component, here a cutter 50, to the fork 12 of the arm 10. The fork 12 of the arm 10 engages with the cutter underneath the lip 52.

Once all of the laminated membranes of the apparatus have been pierced, the cutter 50 is returned to its original position on the platform 2 by rotation of the platform 2, lowering of the arm 10 and rotation of the platform in the opposite direction such that the fork of the arm 12 and the lip of the cutter 52 disengage.

The platform is then rotated such that the sample chamber 60 is now located underneath the means for sonicating the sample 18. The means for sonicating the sample 18 is lowered into the sample chamber 60 and the sonication of the sample is initiated. This provides a physical lysis step to lyse any spores that are present in the sample to release any DNA. At the same time the chemical reagent guanidine hydrochloride also acts to provide chemical lysis of any cells in the sample. As the DNA is freed it binds to the magnetic binding material to form a complex. When sonication is complete the means for sonicating the sample 18 is removed from the sample chamber 60. Prior to being stored the means for sonicating the sample 18 is first washed in two wash chambers, chambers 56 and 58. These chambers are preloaded with a suitable buffer, for example a 50% aqueous ethanolic solution 80. The means for sonicating the sample 18 is raised from the sample chamber 60, that platform 2 rotates such that buffer chamber 56 is now located underneath the means for sonicating the sample 18, the means for sonicating the sample lower into buffer chamber 56, activated briefly and raised. The procedure is repeated for chamber 58. After the second wash the means for sonicating the sample 18 is raised and stored.

The arm 10 is then lowered and the platform 2 is rotates such that the 12 engages underneath the lip 52 of sheath 54. The arm 10 is then raised thereby raising sheath 54 to above the platform 2. The platform 2 is then rotated such that the sample chamber 60 is directly underneath the sheath 54. The arm 10 is lowered thereby lowering the sheath 54 into the sample chamber 60. The magnet 14 is then lowered into sheath 54 and the magnetic beads 100 to which the DNA is bound are attracted to the sheath 54. The arm 10 is then raised thereby raising sheath 54 out of sample chamber 60. The magnet 14 is raised simultaneously with the arm 10 such that it remains inside the sheath 54.

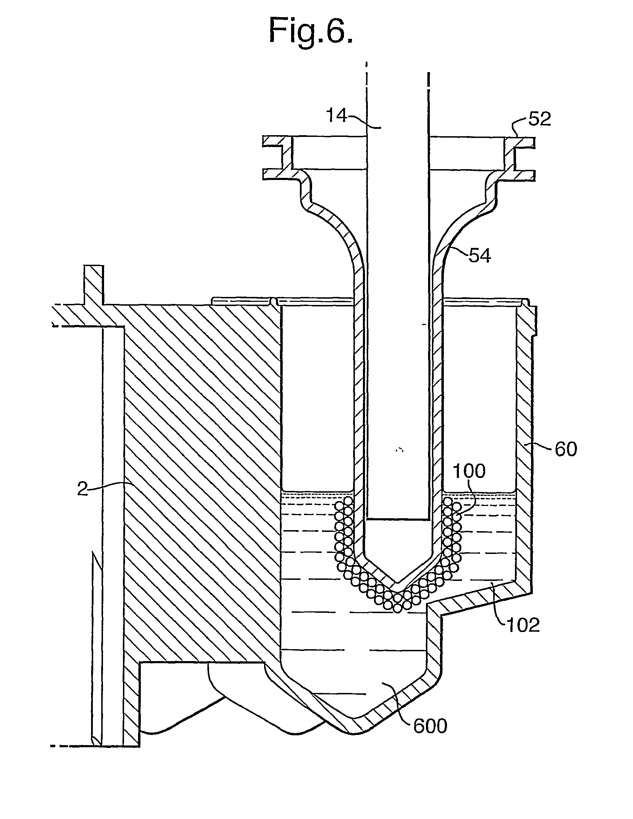

Figure 6 shows a cross section view of the operation of a functional component, here a sheath 54, with a magnet 14 to withdraw bound analyte from the sample chamber 60. The chamber 60 is attached to the platform 2. The sheath is lowered via the arm (not shown) into the sample 102 contained in the sample chamber 60. The magnet 14 is inserted into the sheath 54 and the magnetic beads 100 to which the DNA is complexed are attracted to the sheath 54.

The DNA bound to the magnetic beads 100 is then washed in two buffers. The platform 2 is rotated such that first buffer chamber 64 containing a tris hydrochloride buffer solution is directly underneath the sheath 54 to which the magnetic beads 100 are attracted. The arm 10 is lowered, thereby lowering the sheath 54 into the buffer chamber 64. The magnet 14 is not lowered though. This means that the beads 100 are no longer attracted to the sheath 54 but instead detract and fall into the buffer solution. Rapid raising and lowering of the arm 10 and thereby sheath 54 in small vertical movements ensures that all beads 100 are released from the sheath 54 and are well mixed with the buffer solution. The sheath 54 is then lowered back into the first buffer chamber 64, the magnet 14 is lowered into the sheath 54 and the magnetic beads 100 with the DNA still bound reattach to the sheath 54. The process is repeated to wash the beads 100 in a second buffer comprising 50% aqueous ethanolic solution contained in a second buffer chamber 66. After washing the magnetic beads 100 with the DNA bound in the second buffer chamber 66 the arm 10 is raised thereby raising the sheath 54 and leaving the magnetic beads 100 in buffer chamber 66. The sheath 54 however is not returned to the platform 2 but instead is retained attached to arm 10.

The platform is now rotated such that the reaction chamber 68 is now directly underneath the means for heating 16. The reaction chamber 68 comprises a lower area 90 comprising a capillary tube 680 and an upper area 92. The lower area 90 is separated from the upper area 92 by an in tact laminated membrane 94. The upper area comprises a small volume, approximately 100µl of water 96. The means for heating 16 is now lowered into the upper area 92 of reaction chamber 68 and is activated to heat the water 96 to a temperature of approximately 90°C. Once the water 96 is heated the means for heating 16 is raised and removed from the reaction chamber 68. The means for heating 16 is then stored on the apparatus 1 for future use.

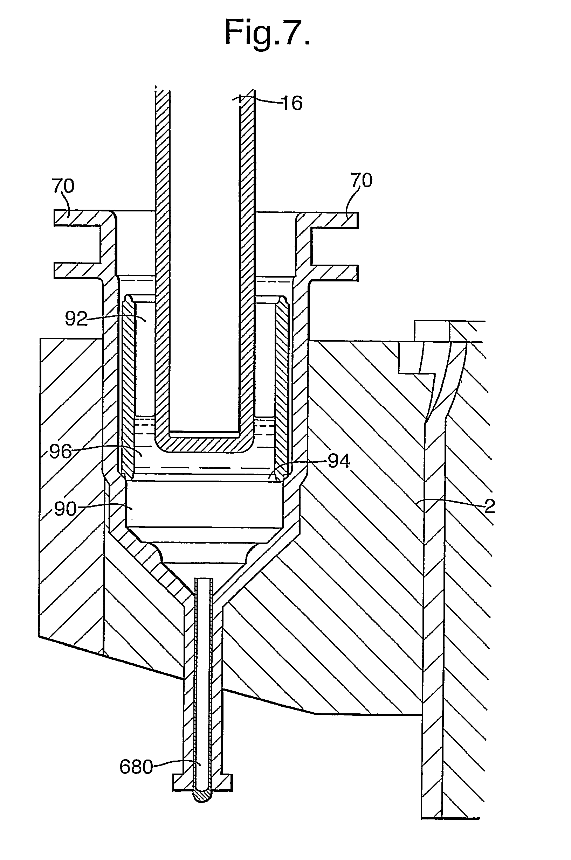

Figure 7 shows a cross section view of the operation of a physical processing means, here a means for heating 16, to heat a volume of solution 96 in one of the chamber, here the reaction chamber 68, of the apparatus 1. The reaction chamber is attached tot he platform 2. The means for heating heats the water 96 that is held in the upper section 92 of the reaction chamber 68. The upper section 92 and the lower section 90 of the reaction chamber 68 are separated by an in tact membrane 94.

The platform is again rotated such that the second buffer chamber 66 comprising the magnetic beads 100 to which the DNA remains bound is directly underneath the sheath 54. The arm 10 is lowered thereby lowering the sheath 54 into the second buffer chamber 66. The magnet 14 is again lowered into the sheath and again the beads 100 are attracted to the sheath 54. The sheath 54 and magnet 14 are both raised, that platform is rotated such that now the reaction chamber 68 is directly beneath the sheath 54. The arm 10 is lowered to lower the sheath 54 into the upper section 92 of the reaction chamber 68. As before, the magnet 14 is not lowered such that the beads 100 are no longer attracted to the sheath 54. The beads 100 are released into the upper section 92 of the reaction chamber 68. As previously small raising and lowering of the arm 10 and sheath 54 ensure that all beads are released from the sheath 54. The DNA is then eluted from the beads 100 by the warm water 96. The arm 10 is raised such that the sheath 54 is removed from the reaction chamber 68.

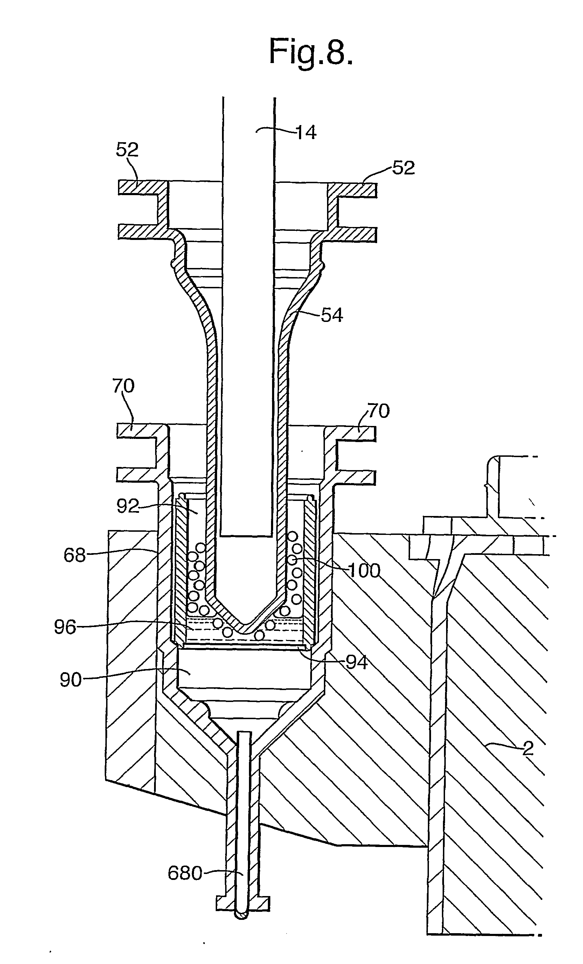

Figure 8 shows a cross section view of the operation of a functional component, here a sheath 54, with a magnet 14 to release the bound analyte 100 into the reaction chamber 68. The magnetic beads 100 are released into the upper section 92 of the reaction chamber 68 where the heated water 96 elutes the DNA from the magnetic beads 100.

The platform is again rotated such that now the reagent chamber 62, into which have been pre-loaded the necessary reagents for a nucleic acid amplification reaction, is directly underneath the sheath 54. The arm 10 is lowered thereby lowering the sheath 54 into the reagent chamber 62. The reagents (not shown) have been pre formulated such that they are also bound to magnetic beads (not shown). Once the sheath 54 is in position in the reagent chamber 62 the magnet 14 is lowered into the sheath 54 and the magnetic beads to which the reagents are bound are attracted to the sheath 54. The sheath 54 and magnet 14 are together raised to remove the reagents (not shown) from the reagent chamber 62. The platform 2 is then rotated such that the reaction chamber 68 is now directly underneath the sheath 54. The arm 10 is then lowered thereby lowering the sheath 54 into the upper section of the reaction chamber 92. Again the magnet 14 is not lowered such that the magnetic beads to which the reagents are bound are released from the sheath 54 into the upper section 92 of the reaction chamber 68. The reagents are eluted from the magnetic beads by the warm water 96. After elution is complete the arm 10 is again lowered with sheath 54 in position. The magnet 14 is lowered into the sheath 54 and all of the magnetic beads in the upper section 92 of the reaction chamber 68, ie those from the analyte and for the reagent, are attracted to the sheath 54. The sheath 54 and magnet 14 are both raised to remove the beads and the platform 2 rotated. The beads are then deposited as waste into one of the used buffer chambers. After the beads have been released from sheath 54, the sheath is returned to its initial position on the platform 2 by again using movement of the arm 10 and rotation of the platform 2.

The upper section 92 of reaction chamber 68 now comprises a purified nucleic acid sample and all of the required reagents for an amplification reaction. The arm 10 is now used to pick up the cutter 50. The platform 2 again rotates such that the reaction chamber 68 is now directly underneath the cutter 50. The arm 10 is lowered thereby lowering the cutter 50 into the reaction chamber 68. The cutter 50 pierces the membrane 94 and the water 96 containing the DNA and reagents drops into the lower section 90 of the reaction chamber 68. Rather than using the arm to remove the cutter 50, the cutter is instead left in position in reaction chamber 68 where it now acts as a stopper to seal the reaction chamber 68.

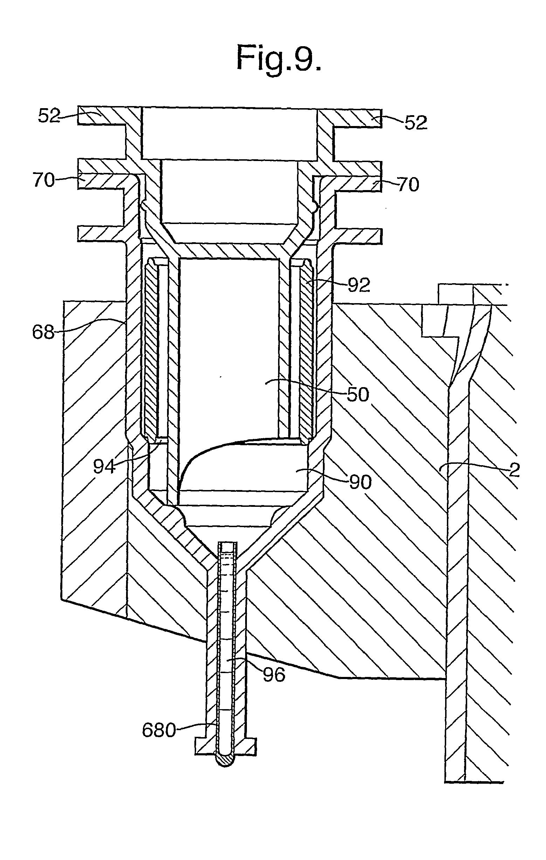

Figure 9 shows a cross section view of the reaction chamber 68, here with a functional component, here the cutter 50, in position to seal the reaction chamber 68. The cutter 50 has also been used to pierce the membrane 94 separating the upper section 92 and the lower section 90 of the reaction chamber 68 such that the water 96 containing the DNA analyte and the reagents for a nucleic amplification reaction can enter the capillary tube 680. The cutter 50 remains in place to seal the reaction chamber 68 such that no solvent can evaporate from the chamber during the amplification reaction.

In order to drive the water 96 containing the DNA and the reagents into the capillary tube 680 of the reaction chamber 68 the platform 2 is rotated at high speed. The centrifugal force drives the fluid 96 into the capillary tube 680. This is aided by the fact that, during rotation, the reaction chamber 68 is able to pivot on the platform by means of spindles 72 mounted in sockets 74. Furthermore in order to prevent the spillage of liquid contained in chambers 56, 58, 60, 64 and 66 during this high speed rotation, these chambers are designed with an oval cross section and a circular recess at the base, as shown in Figure 3. This internal design prevents any spillage.

After the water 96 containing the DNA and the nucleic amplification has entered the capillary tube 680 the sample is ready to undergo a nucleic acid amplification reaction. At this stage the reaction chamber 68 can be manually removed from the apparatus 1 for use in another apparatus where the nucleic acid amplification is conducted. In this instance however the single apparatus has been adapted to additionally conduct the nucleic acid amplification and optical detection thereof. These operations are performed in the lower half of the apparatus 1 (not shown). In order to fully automate the process the reaction chamber 68 has been adapted with a lip 98 such that it can be manipulated by the apparatus arm 10 in the same manner as other functional components 50 and 54. The arm 10 is lowered and the platform 2 rotated such that the lip 98 of the reaction chamber 68 engages with the fork 12 of the arm 10. The arm 10 is then raised thereby raising the reaction chamber 68. The raised reaction chamber 68 is shown in Figures 1 and 2. The platform then rotates such that the cut away section 78 is now aligned underneath the raised reaction chamber 68. The arm is then lowered thereby lowering the reaction chamber through the cut away section 78 and into the lower part of the apparatus 1. When located in the lower part of the apparatus 1 the nucleic acid amplification is performed using a thermal cycler to heat and cool the reaction mixture in the capillary tube 680 and an optical detector to detect the end products. This is aided by the fact that the capillary tube is coated with an electrically conducting polymer which allows rapid heating and cooling of the capillary tube 680.

After completion of the nucleic acid amplification the platform 2 containing the cutter 50, the sheath 54 and chambers 56, 58, 60, 62, 64 and 66 and the reaction chamber 68 are all removed from the apparatus and disposed off. A new platform containing the necessary elements can then be introduced into the apparatus such that it can be used again in another sample manipulation.

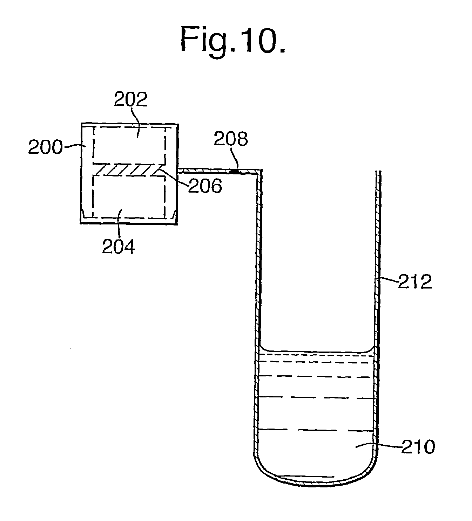

Figure 10 shows a cross section of a lid 200 of the present invention with a recessed membrane 206 attached to a sample vessel 212. The sample 210 is introduced into a chamber 212. In order to seal the chamber 212 to ensure that the sample 210 is not contaminated a lid must be used. The lid 200 of the present invention comprises a membrane 206, for example a laminated membrane, which can be pierced into order to access the sample for further processing at a later time. In order to prevent cross contamination of the sample 210 from the membrane 206, the membrane 206 is recessed within the lid 200. This has the result that if a user touches the lid 200 to close the it from either the upper side or the lower side there is a gap 202 or 204 respectively between the user and the membrane 206. As such the user does not contaminate the membrane 206. In this instance the lid 200 is attached to the sample chamber 212 via a hinged flange 208. However it is not a requirement that the lid be attached to a chamber, the lid alone could be manufactured for use with a wide variety of different sample vessels.

## Claims

1. An apparatus for processing a fluid sample prior to a nucleic acid amplification reaction, comprising:
(i) a platform(2):
(ii) a chamber (60) suitable for receiving a sample which is either integrated into the platform or removeable from it;
(iii) a functional component (50, 54) capable of moving analyte or reagent or piercing seals of chambers that may reversibly attach to an arm (10) of said apparatus and that may be held on the platform (2);
(iv) a sealed chamber (62, 64, 66) comprising a predispensed reagent for use in processing a fluid sample prior to a nucleic acid amplification reaction arranged on the platform;
(v) an arm (10) capable of being raised and lowered and including a means for removeably attaching to the functional component such that said component may be raised and lowered with the arm; and
(vi) a means (6) for moving the platform such that a chamber or functional component may be aligned with respect to the arm.

2. An apparatus according to Claim 1 wherein the platform (2) is circular.

3. An apparatus according to any one of the preceding claims further comprising an exchangeable chamber containing a predispensed reagent.

4. An apparatus according to claim 3 wherein the exchangeable chamber is colour coded or marked with a bar code.

5. An apparatus according to claim 4 wherein the exchangeable container carries a bar code and the apparatus further comprises a bar code reader.

6. An apparatus according to any one of the preceding claims wherein the arm (10) mechanically removeably attaches to the functional component (50, 54).

7. An apparatus according to any one of the preceding claims wherein the functional component (54) is capable of moving analyte or reagent.

8. An apparatus according to any of Claims 1 to 7 wherein the apparatus additionally comprises a physical processing means.

9. An apparatus according to Claim 8 wherein the physical processing means is a means for heating the contents of a chamber of the apparatus.

10. An apparatus according to Claim 9 wherein the physical processing means is a means for sonicating the contents of a chamber of the apparatus.

11. Use of an apparatus according to any one of claims 1 to 10 for the processing of a sample prior to a nucleic acid amplification reaction.

12. A platform for processing a sample prior to a nucleic acid amplification reaction, said platform (2) comprising
(i) a chamber for receiving a sample;
(ii) one or more further chambers containing predispensed reagents for use in said processing, the one or more further chambers being sealed;
(iii) a hole (50, 52) for accommodating a functional component (52, 54).

13. A platform according to claim 12 which is circular.

14. A platform according to claim 12 or claim 13 which is able to receive an exchangeable chamber containing a further predispensed reagent for use in said processing.

15. A platform according to claim 14 wherein the chamber is colour coded or marked with a bar code.
